**Europäisches Patentamt**

**European Patent Office**

**Office européen des brevets**

(19)

(11) Veröffentlichungsnummer: **0 014 328**
**B1**

# EUROPÄISCHE PATENTSCHRIFT

(12)

(45) Veröffentlichungstag der Patentschrift:
27.01.82

(21) Anmeldenummer: 80100138.9

(22) Anmeldetag: 11.01.80

(51) Int. Cl.³: **H 04 Q 11/04**

(54) **Belegschaltung an einer "ankommenden" c-Ader in einer Fernmeldeeinrichtung.**

(30) Priorität: 31.01.79 DE 2903660

(43) Veröffentlichungstag der Anmeldung:
20.08.80 Patentblatt 80/17

(45) Bekanntmachung des Hinweises auf die Patenterteilung:
27.01.82 Patentblatt 82/4

(84) Benannte Vertragsstaaten:
AT BE CH FR GB IT LU NL SE

(56) Entgegenhaltungen:
DE-A-2 606 090
DE-A-2 606 103
DE-A-2 754 995
US-A-3 965 447
SIEMENS ZEITSCHRIFT, Band 49, Heft 7,
1975, Seiten 466—472, München, DE
EHRICKE et al.: »Kennzeichenumsetzergerät im Zeitmultiplex-Übertragungssystem PCM 30«

(73) Patentinhaber: SIEMENS AKTIENGESELLSCHAFT Berlin
und München, Postfach 22 02 61, D-8000 München 22 (DE)

(72) Erfinder: Tschöpe, Norbert, Badstrasse 1,
D-8000 München 70 (DE)

Belegschaltung an einer »ankommenden« c-Ader in einer Fernmeldeeinrichtung

Die Erfindung bezieht sich auf eine Belegschaltung an einer »ankommenden« c-Ader in einer Fernmeldeeinrichtung, insbesondere in einem Kennzeichenumsetzer »gehend« eines Zeitmultiplexsystems für Pulscodemodulation, mit einem Aufprüfkreis, dessen Ausgang mit der »ankommenden« c-Ader verbunden ist, mit einem Haltekreis, dessen Ausgang ebenfalls mit der »ankommenden« c-Ader verbunden ist und der eine den Haltestrom liefernde Konstantstromquelle enthält, mit einer Ansteuerlogik, deren erster Ausgang mit dem Eingang des Aufprüfkreises und deren zweiter Ausgang mit dem Eingang des Haltekreises verbunden ist und die einen Setzeingang für ankommende Steuersignale und einen Rückstelleingang aufweist, sowie mit einer Auswerteschaltung für den c-Ader-Signalzustand, deren mit dem Rückstelleingang verbundener Ausgang abgehende Steuersignale liefert. Eine derartige Belegschaltung ist aus der DE-A-2 608 103 bekannt.

Im Fernsprechnetz der Deutschen Bundespost werden die Schalteinrichtungen der Wahlstufen in den Orts- und Fernvermittlungsstellen durch Austausch von Gleichstromzeichen über die Sprech- und Signaladern gesteuert. Zur Übertragung über abgeriegelte Leitungen sind die Gleichstromzeichen ungeeignet. Deshalb müssen zwischen die Vermittlungs- und Übertragungseinrichtungen Zeichenumsetzer eingefügt werden, die die Schaltkennzeichen der Vermittlungsstellen in eine für die Übertragungseinrichtung geeignete Form umsetzen.

Für die mit Trägerfrequenz-Übertragungssystemen ausgerüsteten Leitungsabschnitte des Bezirks- u. Fernnetzes gibt es als Zeichenumsetzer die genannten Trägerfrequenz-Wahlübertragungen. Bei Pulscodemodulationssystemen dienen als Zeichenumsetzer sogenannte Kennzeichenumsetzer. Die in Richtung des Verbindungsaufbaus am Eingang einer Übertragungsstrecke angeordneten Zeichenumsetzer werden als »gehend« und die am Ausgang befindlichen als »kommend« bezeichnet.

Eine c-Ader befindet sich zwischen der Prüfschaltung einer Wahlstufe und der Belegschaltung einer nachfolgenden Wahlstufe oder eines »gehenden« Kennzeichenumsetzers. Von der Prüfschaltung wird über die c-Ader zur Belegschaltung Belegung signalisiert und von der Belegschaltung über die c-Ader zur Prüfschaltung Belegungsbereitschaft. Bei Belegungsbereitschaft liegen am c-Ader-Anschluß der Belegschaltung −60 V = über einen niederohmigen Innenwiderstand und bei Belegung ca. −5 V =.

Nachdem beim Belegungsvorgang das Prüfrelais in der Wahlstufe über den Aufprüfkreis der Belegschaltung eines »gehenden« Kennzeichenumsetzers angezogen hat, muß von dieser ein Haltestrom $I_c$ geliefert werden, der $22\,\text{mA} \leq I_c \leq 40\,\text{mA}$ beträgt. Die Verlustleistung im Kennzeichenumsetzer ist dabei von dem Widerstand der c-Ader, der in der c-Ader induzierten Längsspannung und von der zur Speisung der Konstantstromquelle gewählten Spannung abhängig.

Aufgabe der Erfindung ist es, zur Vermeidung von Störungen durch 50-Hz- und $16\,\frac{2}{3}$-Hz-Beeinflussung in den Schaltungen an der c-Ader eine Belegschaltung zu realisieren, die den Haltestrom aus der Batteriespannung −60 V = erzeugt und dabei wenig Leistung in den Bauteilen umsetzt.

Bei einer Belegschaltung der einleitend geschilderten Art wird diese Aufgabe erfindungsgemäß dadurch gelöst, daß im Haltekreis als Konstantstromquelle ein Schaltregler mit vorgeschriebenem, getaktetem Regelkreis konstanter Taktfrequenz vorgesehen und daß als Auswerteschaltung an der c-Ader ein erster Stromfühler vorgesehen ist.

Nach einem älteren Vorschlag (DE-A-2 748 522) wird zwar bereits ein Schaltregler zur verlustarmen Erzeugung eines konstanten Stromes im Sprechadernpaar einer Übertragung herangezogen, jedoch ist dieser mit einem freischwingenden Regelkreis versehen.

Eine erste vorteilhafte Ausgestaltungsvariante besteht in einem zweiten Stromfühler, der die Regelgröße für den Schaltregler ermittelt und dessen Eingang mit einem Meßausgang des Schaltreglers sowie dessen Ausgang mit einem Regelspannungseingang des Regelkreises verbunden ist.

Eine zweite vorteilhafte Ausgestaltungsvariante besteht in der Verwendung des ersten Stromfühlers zur Ableitung der Regelgröße für den Schaltregler bei Verbindung des Ausgangs dieses Stromfühlers mit dem Regelspannungseingang des Regelkreises.

Anhand von Ausführungsbeispielen wird die Erfindung nachstehend näher erläutert.

Fig. 1 zeigt ein Blockschaltbild einer bekannten Belegschaltung,

Fig. 2 zeigt einen Impulsplan zu dieser bekannten Belegschaltung,

Fig. 3 zeigt ein Blockschaltbild der erfindungsgemäßen Belegschaltung,

Fig. 4 zeigt eine erste Variante eines neuen Schaltungsteils,

Fig. 5 zeigt eine detaillierte Ausführung der ersten Variante,

Fig. 6 zeigt einen Impulsplan zur ersten Variante,

Fig. 7 zeigt eine zweite Variante des neuen Schaltungsteils,

Fig. 8 zeigt eine detaillierte Ausführung der zweiten Variante,

Fig. 9 zeigt einen Impulsplan zur zweiten Variante und

Fig. 10 zeigt ein Ausführungsbeispiel eines Stromfühlers.

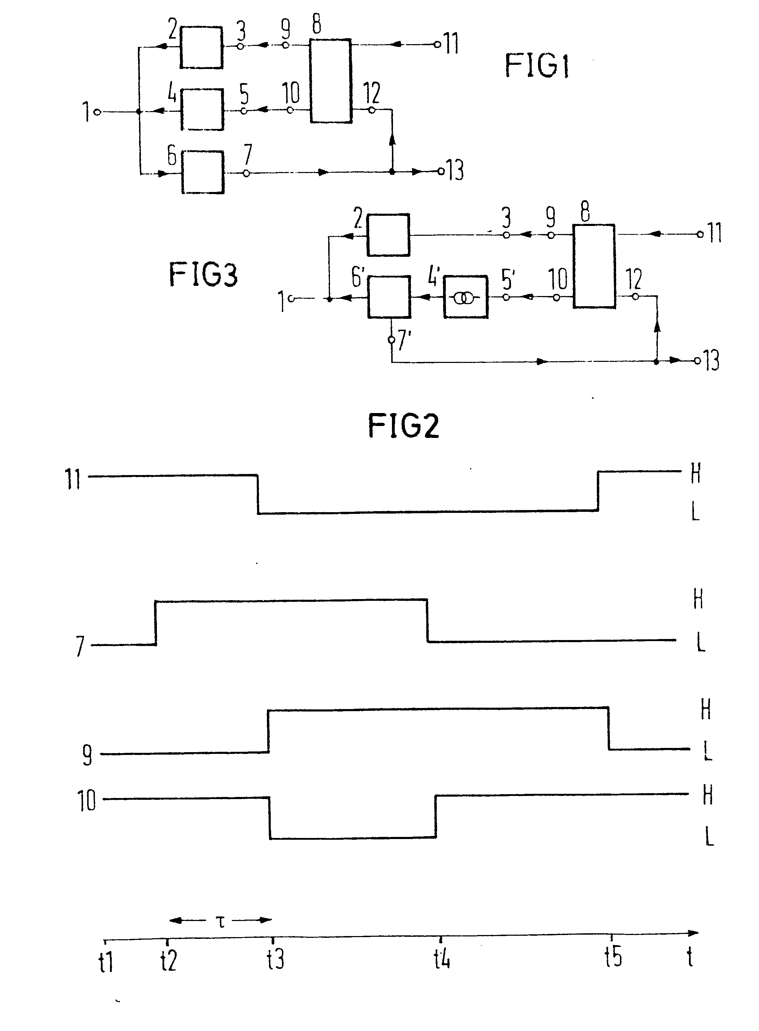

Fig. 1 zeigt eine bekannte Belegschaltung.

Diese Anordnung enthält einen Anschluß 1 für die c-Ader, einen Aufprüfkreis 2 mit einem Eingang 3, einen Haltekreis 4 mit einem Eingang 5, eine Auswerteschaltung 6 mit einem Ausgang 7, eine Ansteuerlogik 8 mit einem Setzeingang 11, mit einem diesem zugeordneten Ausgang 9, mit einem weiteren Ausgang 10 und mit einem Rückstelleingang 12 sowie einen Anschluß 13 für eine abgehende Steuerleitung. Der Setzeingang 11 dient zugleich als Anschluß für die eine ankommende Steuerleitung.

Die Wirkungsweise der Belegschaltung nach Fig. 1 wird anhand des Impulsdiagramms nach Fig. 2 mit den den Logikpegeln »L« und »H« entsprechenden Spannungsverläufen an den Punkten 11, 7, 9 und 10 erläutert. Zur Zeit t1 liegt Belegungsbereitschaft der Gegenstelle vor. Bei Belegung spricht zur Zeit t2 die Auswerteschaltung 6 auf ein Erdsignal auf der c-Ader an und gibt an ihrem Ausgang 7 ein abgehendes Steuersignal ab. Dieses wird beispielsweise im weiteren Verlauf einer zentralen Kennzeichen-Verarbeitung zugeführt.

Nach einer Aufprüfzeit $\tau$ ändert sich am Setzeingang 11 das ankommende Steuersignal vom Zustand »H« in den Zustand »L«. Der Zustandswechsel am Setzeingang 11 hat zur Folge, daß am Ausgang 9 sich das Aufprüfkreis-Steuersignal vom Zustand »L« in den Zustand »H« und am Ausgang 10 vom Zustand »H« in den Zustand »L« ändert. Bei der Auslösung wird zur Zeit t4 das Erdsignal wieder von der c-Ader abgeschaltet und die Auswerteschaltung 6 gibt ein abgehendes Steuersignal mit dem Zustand »L« ab. Dies bewirkt in der Ansteuerlogik 8, daß am Ausgang 10 das Signal vom Zustand »L« in den Zustand »H« übergeht. Zum Zeitpunkt t5 besteht bei der Gegenstelle wieder Belegungsbereitschaft und es stellt sich erneut der Signalzustand vom Zeitpunkt t1 ein.

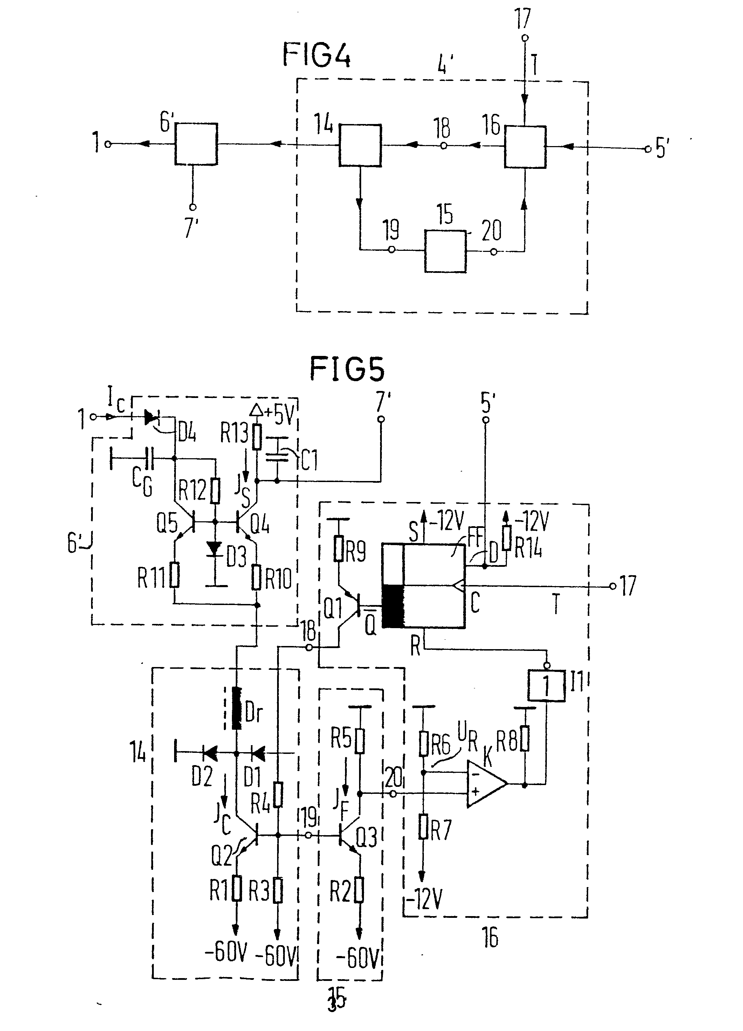

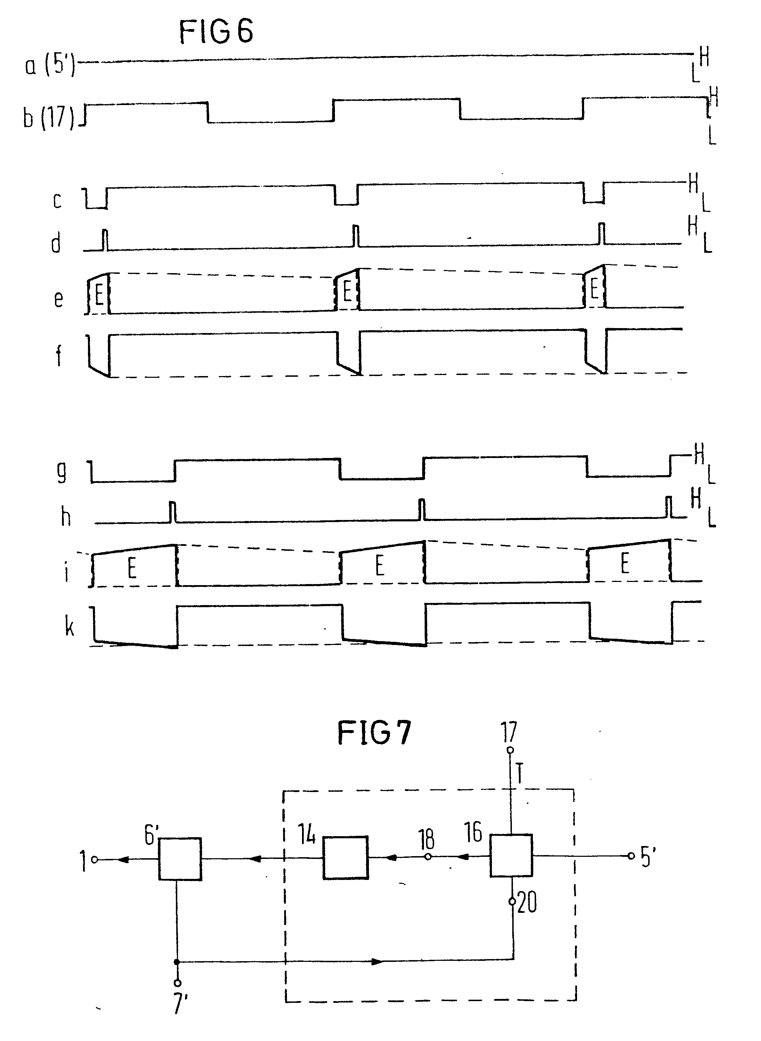

Fig. 3 zeigt ein Blockschaltbild der erfindungsgemäßen Belegschaltung. Diese Anordnung unterscheidet sich von der nach Fig. 1 dadurch, daß im Haltekreis 4' ein Schaltregler mit vorgeschaltetem getaktetem Regelkreis konstanter Taktfrequenz als Konstantstromquelle vorgesehen ist und daß als Auswerteschaltung an der c-Ader ein Stromfühler 6' vorgesehen ist. Für den Haltekreis 4' gibt es zwei in den Fig. 4 und 7 dargestellte Varianten. Die Wirkungsweise der erfindungsgemäßen Belegschaltung ergibt sich aus der nachfolgenden Erläuterung dieser beiden Varianten.

Fig. 4 zeigt die erste Variante mit einem Stromfühler 6' und einem Haltekreis 4'. Dieser enthält einen Schaltregler 14, einen zweiten Stromfühler 15 und einen Regelkreis 16. Über eine Klemme 17 wird dem Regelkreis 16 ein Takt T zugeführt.

Fig. 5 zeigt die Anordnung nach Fig. 4 im Detail. Der Schaltregler 14 enthält einen Schalttransistor Q2, Widerstände R1, R3, R4, Dioden D1, D2 und eine Drossel Dr. Der Stromfühler 15 enthält einen Transistor Q3 sowie Widerstände R2 und R5. Der Regelkreis 16 enthält einen Komparator K, Widerstände R6 bis R9 sowie R14, einen Transistor Q1, einen Inverter I1 sowie ein RS-Flipflop FF. Der Stromfühler 6' enthält Transistoren Q4 und Q5, Widerstände R10 bis R13, Kondensatoren C1 und $C_G$ sowie Dioden D3 und D4.

Die zur Erzeugung des Haltestroms der Belegschaltung nötige Spannung erzeugt der z. B. mit 64 kHz betriebene Schaltregler 14 aus der Versorgungsspannung ($-60$ V $=$). Diese ist von dem in der c-Ader am Anschluß 1 fließenden Strom abhängig.

Während der Einschaltphase mißt der Stromfühler 15 den durch den Schalttransistor Q2 fließenden Strom und bewirkt dessen Abschalten, wenn ein vorgegebener Wert überschritten wird. Erst die folgende steigende Taktflanke des 64-kHz-Taktes an der Klemme 17 schaltet den Schalttransistor Q2 erneut ein. Das Impuls-Pause-Verhältnis wird also vom Stromfluß bestimmt. Der Schaltregler 14 ist zwangsgesteuert.

Wird eine Belegung im »gehenden« Kennzeichenumsetzer erkannt, so wird nach einer bestimmten Zeit vom Aufprüfkreis 2 auf den Haltekreis 4' umgeschaltet. Dazu wird an die Klemme 5' ein H-Signal gelegt. Mit der steigenden Flanke des Taktes T wird dieser Zustand in das RS-Flipflop FF übernommen. Daraus folgt, daß der Ausgang $\overline{Q}$ des RS-Flipflops FF ein L-Signal erhält und der Transistor Q1 und der Schalttransistor Q2 leitend werden. Im Haltekreis 4' beginnt ein Strom $I_C$ zu fließen. Der Stromspiegel aus dem Schalttransistor Q2 und dem Transistor Q3 und den Widerständen R1 und R2 erzeugt einen dem Strom $I_C$ proportionalen Strom $I_F$ der am Widerstand R5 einen Spannungsabfall hervorruft. Entspricht der Spannungsabfall, der durch den Teiler R6, R7 eingestellten Referenzspannung $U_R$, so schaltet der Komparator K und setzt über den Inverter I1 das RS-Flipflop FF zurück. Der Ausgang $\overline{Q}$ des RS-Flipflops FF erhält ein H-Signal, so daß der Transistor Q1 und der Schalttransistor Q2 gesperrt werden. Die nächste steigende Taktflanke setzt den Ausgang $\overline{Q}$ des RS-Flipflops FF wieder auf das L-Signal.

Der Widerstand R4 und die Diode D1 verhindern, daß der Schalttransistor Q2 in die Sättigung getrieben wird.

Während der Einschaltphase des Schalttransistors Q2 speichert die Drossel Dr Energie, die sie während der Ausschaltphase an die äußere Last an dem Anschluß 1 über die Diode D2 wieder abgeben kann. Zur Glättung der auftretenden Spannungs- bzw. Stromschwankungen dient der Kondensator $C_G$.

Der Stromfühler 15 muß kapazitätsarm aufgebaut sein, damit Stromspitzenwerte schnell erkannt werden können. Außerdem ist als Spannungsbegrenzung für den Schaltregler 14 ein Transistor Q5 an der c-Ader erforderlich, falls Längsspannungen auftreten. Um diesen zusätzlichen Transistor Q5 wurde der Stromfühler 6' aufgebaut. Er besteht aus einem Stromspiegel mit den Transistoren Q4 und Q5, deren Basen mit Hilfe der Diode D3 auf Erde geklemmt werden. Durch Längsspannungen können in der c-Ader Spannungen auftreten, die viel po ver als das Erdpotential sind. In diesem       wäre ein Stromfluß über den Transistor Q    en Widerstand R11, die Drossel Dr und die Diode D2 möglich, der nicht aufgrund der Ausschaltphase erzeugt wird und die Schaltung zerstören könnte. Die Diode D3 hält die Basen der Transistoren Q4 und Q5 auf Erdpotential fest. Aus diesem Grunde kann an den Emittern maximal Erdpotential auftreten. Der statische Stromfluß über den Transistor Q5, den Widerstand R11, die Drossel Dr und die Diode D2 ist damit unterbunden. Der Transistor Q5 arbeitet während der Periode, in der das Potential an der c-Ader positiver als Erdpotential ist als Konstantstromquelle, die durch den Schaltregler 14 ge  euert wird. Der Stromfühler 6' soll ferner ein Si  l erzeugen, das dem Strom in der c-Ader pr   tional ist.

D   Stromspiegel aus den Transistoren Q4 und Q5 s wie den Widerständen R10 und R11 erzeugt einen Strom $I_S$, der dem in der c-Ader fließenden Strom $I_C$ proportional ist. Daraus folgt, daß der Spannungsabfall über dem Widerstand R13 proportional dem Strom $I_C$ sein muß. Der Kondensator C1 dient der Glättung der vom Schaltregler 14 verursachten Stromschwankung.

Fig. 6 zeigt einen Impulsplan zur Anordnung nach Fig. 5, der sich im Zeitraum zwischen $t_4$ und $t_5$ in Fig. 2 abspielt. Zeile a zeigt ein Signal an der Klemme 5' und Zeile b zeigt den Takt an der Klemme 17.

Die Zeilen c bis f betreffen den Fall eines kleinen Widerstandes in der c-Ader und die Zeilen g b   den Fall eines großen W  erstandes in der c   der.

Die Signale c und g liegen am Ausg  $\overline{Q}$ des RS-Flipflops FF. Die Signale d und h  en am Eingang R des RS-Flipflops FF. Die Signale e und i zeigen den durch den Schalttransistor Q2 fließenden Strom und die Signale f und k zeigen die Spannung am Pulseingang des Komparators K. Die gestrichelte Linie bei den Signalen e und i zeigen den Strom durch die Diode D2 und die gestrichelte Linie bei den Signalen f und k zeigt die Spannung am Minuseingang des Komparators K.

Die beiden Fälle zeigen die Abhängigkeit der Einschaltphase E des Schalttransistors Q2 vom Widerstand in der c-Ader, die durch den Takt T und den Schaltzustand des Komparators K gesteuert wird.

Fig. 7 zeigt eine zweite Variante des neuen Schaltungsteils. Dieser unterscheidet sich von der Anordnung nach Fig. 4 dadurch, daß der Stromfühler 15 entfällt. Der Regelspannungseingang des Regelkreises 16 ist unmittelbar mit dem Ausgang 7' verbunden.

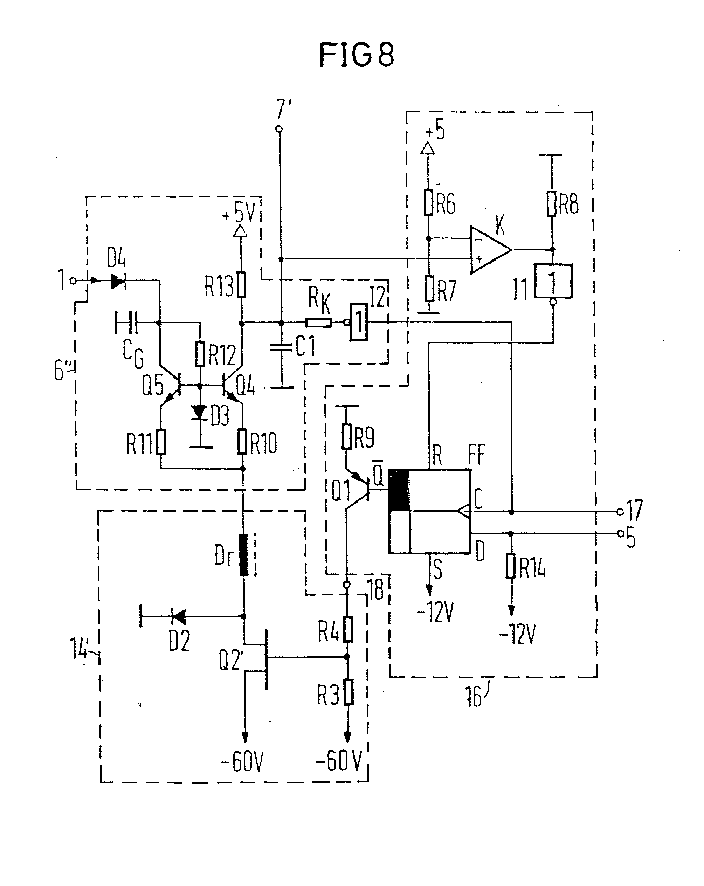

Fig. 8 zeigt eine detaillierte Ausführung der Anordnung nach Fig. 7. Der Schaltregler 14' enthält hier einen Feldeffekttransistor Q2', die Widerstände R3, R4, die Diode D2 und die Drossel Dr.

er Regelkreis 16 entspricht dem in der A  dnung nach Fig. 4.

Stromfühler 6'' unterscheidet sich von de  Stromfühler 6' nach Fig. 5 dadurch, daß zusätzlich ein Widerstand $R_K$ und ein Inverter I2 vorgesehen sind.

Die Wirkungsweise der Anordnung nach Fig. 8 unterscheidet sich von der nach Fig. 5 dadurch, daß die Aufgabe des Stromfühlers 15 dem Stromfühler 6'' zugeordnet ist. Dies erfolgt in der Weise, daß die dem Komparator K zugeführte Meßgröße für den Strom $I_C$ in der c-Ader mit dem über den Inverter I2 und den Widerstand $R_K$ zugeführten Takt T überlagert wird und auf den jeweiligen Schaltzustand des Komparators K einwirkt.

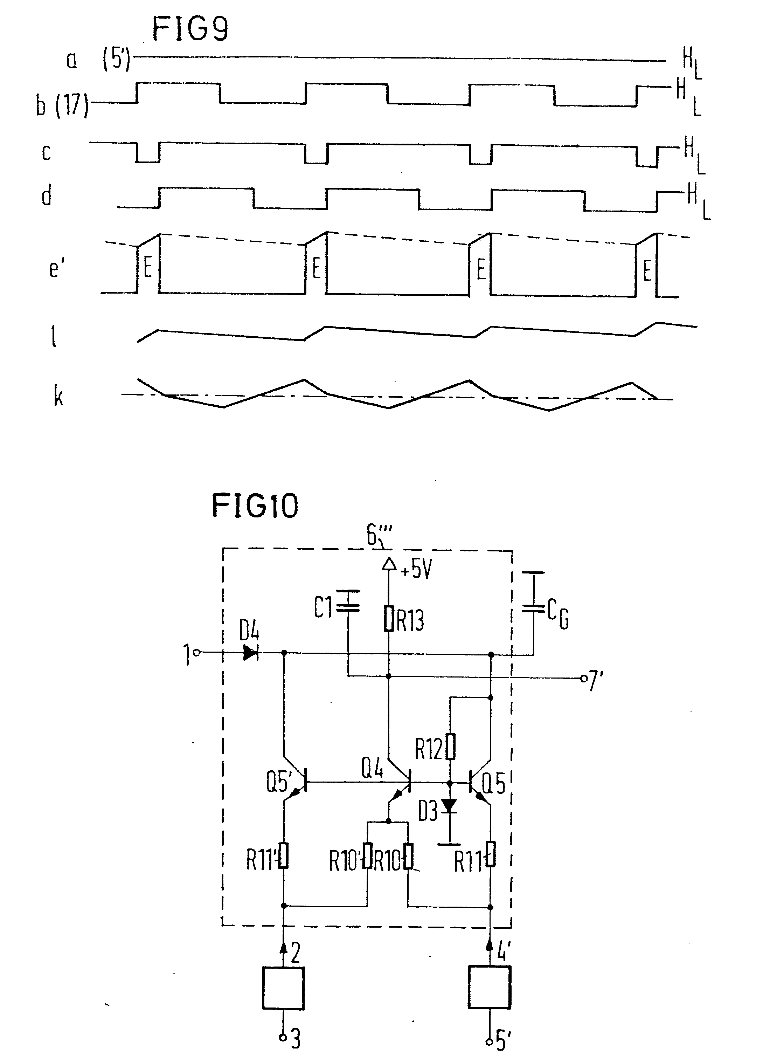

Fig. 9 zeigt einen Impulsplan zur Anordnung nach Fig. 8. Die Zeilen a—d und k entsprechen denen   Fig. 6. Zeile e' zeigt den Strom durch den   effektransistor Q2'. Die gestrichelte Linie  t den Strom durch die Diode D2. Die Zeile I  igt den Strom durch den Transistor Q4. Die Überlagerung des Signals I mit dem invertierten Signal b ergibt ein Steuersignal k für den Komparator K, das in seiner Wirkung eine vergleichbare periodische Schaltfolge ermöglicht, wie das Signal k in Fig. 6.

Fig. 10 zeigt einen Stromfühler 6''', der gegenüber dem bisher gezeigten in der Weise erweitert ist, daß der Stromfluß in der c-Ader sowohl beim angeschalteten Aufprüfkreis 2 der eigenen Belegschaltung als auch beim angeschalteten Haltekreis 4' von einem gemeinsamen Detektor am Ausgang 7' ausgewertet wird.

Der Stromfühler 6''' ist gegenüber dem Stromfühler 6' nach Fig. 5 durch einen Transistor Q5' und Widerstände R10' und R11' erweitert.

Der Stromfühler 6''' wirkt in der Weise, daß der Stromfluß aus dem Aufprüfkreis 2 über den Transistor Q5' und der Stromfluß aus dem Haltekreis 4' über den Transistor   ermittelt wird und durch Stromspiegelung am Transistor Q4 ein Signal dem Ausgang 7' zugeführt wird.

**Patentansprüche**

1. Belegschaltung an einer »ankommenden« c-Ader in einer Fernmeldeeinrichtung, insbesondere in einem Kennzeichenumsetzer »gehend« eines Zeitmultiplexsystems für Pulscodemodulation, mit einem Aufprüfkreis (2), dessen Ausgang mit der »ankommenden« c-Ader verbunden ist,

mit einem Haltekreis (4'), dessen Ausgang ebenfalls mit der »ankommenden« c-Ader verbunden ist und der eine den Haltestrom liefernde Konstantstromquelle enthält,

mit einer Ansteuerlogik (8), deren erster Ausgang (9) mit dem Eingang (3) des Aufprüfkreises (2) und deren zweiter Ausgang (10) mit dem Eingang (5') des Haltekreises (4') verbunden ist und die einen Setzeingang (11) für ankommende Steuersignale und einen Rückstelleingang (12) aufweist sowie

mit einer Auswerteschaltung für den c-Ader-Signalzustand, deren mit dem Rückstelleingang (12) verbundener Ausgang (7') abgehende Steuersignale liefert,
dadurch gekennzeichnet,
daß im Haltekreis (4') als Konstantstromquelle ein Schaltregler (14) mit vorgeschaltetem, getaktetem Regelkreis (16) konstanter Taktfrequenz vorgesehen ist und
daß als Auswerteschaltung an der c-Ader ein erster Stromfühler (6') vorgesehen ist.

2. Belegschaltung nach Anspruch 1, dadurch gekennzeichnet, daß ein zweiter Stromfühler (15) vorgesehen ist, der die Regelgröße für den Schaltregler (14) ermittelt und dessen Eingang (19) mit einem Meßausgang des Schaltreglers (14) sowie dessen Ausgang mit einem Regelspannungseingang des Regelkreises (16) verbunden ist (Fig. 4).

3. Belegschaltung nach Anspruch 1, gekennzeichnet durch die Verwendung des ersten Stromfühlers (6') zur Ableitung der Regelgröße für den Schaltregler (14) bei Verbindung des Ausgangs (7') dieses Stromfühlers (6') mit dem Regelspannungseingang (20) des Regelkreises (16) (Fig. 7).

## Claims

1. Seizure circuit at an »incoming« c-wire in a telecommunications device,
in particular in an »outoing« signaling converter of a t.d m system for pulse code modulation,
comprising a test circuit (2) whose output is connected to the »incoming« c-wire,
comprising a holding circuit (4') whose output is likewise connected to the »incoming« c-wire and which contains a constant current source which supplies the holding current,
comprising a drive logic (8) whose first output (9) is connected to the input (3) of the test circuit (2) and whose second output (10) is connected to the input (5') of the holding circuit (4'), and which, possesses a setting input (11) for incoming control signals and a resetting input (12), and
comprising an analysis circuit for the c-wire-signal state whose output (7'), which is connected to the resetting input (12), supplies outgoing control signals, characterised in that
the holding circuit (4') contains, by way of constant current source, a switching regulator (14) preceded by a pulsed regulating circuit (16) of constant clock frequency and
that a first current sensor (6') is provided as analysis circuit on the c-wire.

2. Seizure circuit as claimed in claim 1, characterised in that a second current sensor (15) is provided which determines the regulating value for the switching regulator (14) and whose input (19) is connected to a measuring output of the switching regulator (14) and whose output is connected to a regulating voltage input of the regulating circuit (16) (Fig. 4).

3. Seizure circuit as claimed in claim 1 characterised by the use of the first current sensor (6') for deriving the regulating value for the switching regulator (14), with the connection of the output (7') of this current sensor (6') to the regulating voltage input (20) of the regulating circuit (16) (Fig. 7).

## Revendications

1. Circuit d'occupation d'un fil de test ou de maintien »d'arrivée« dans une installation de télécommunications, plus particulièrement de »départ« dans un convertisseur de signes caractéristiques d'un système de multiplexage par répartition dans le temps pour la modulation par impulsions codées, comportant un circuit d'essai (2) dont la sortie est reliée avec le fil de test ou de maintien »d'arrivée«, un circuit de maintien (4') dont la sortie est également reliée au fil de test ou de maintien »d'arrivée« et qui comporte une source de courant constant fournissant le courant de maintien, un circuit logique d'attaque (8) dont la première sortie (9) est reliée à l'entrée (3) du circuit d'essai (2) et dont la seconde sortie (10) est reliée à l'entrée (5') du circuit de maintien (4'), ledit circuit logique (8) comportant une entrée de positionnement (11) pour des signaux de commande d'entrée et une entrée de remise à l'état initial, ainsi qu'un circuit d'évaluation pour l'état des signaux du fil de test ou de maintien, dont la sortie (7'), reliée à l'entrée de remise à l'état initial (12), fournit des signaux de commande de départ, caractérisé par le fait qu'il est prévu dans le circuit de maintien (4'), au titre de source de courant constant, un régulateur de commutation (14) à circuit de régulation amont (16) cadencé à une d'évaluation, au niveau du fil de test ou de maintien, un premier détecteur de courant (6').

2. Circuit d'occupation selon la revendication 1, caractérisé par le fait qu'il est prévu un second détecteur de courant (6') qui détecte la grandeur de réglage pour le régulateur de commutation (14), et dont l'entrée (19) est reliée à une sortie de mesure du régulateur de commutation (14), alors que sa sortie est reliée à une entrée de tension de régulation du circuit de régulation (16) (figure 4).

3. Circuit d'occupation selon la revendication 1, caractérisé par la mise en oeuvre du premier détecteur de courant (6') pour dériver la grandeur de mesure pour le régulateur de commutation (14) lors de la liaison de la sortie (7') de ce détecteur de courant (6') avec l'entrée de la tension de réglage (20) du circuit de régulation (16) (figure 7).

FIG1

FIG3

FIG2

# FIG4

# FIG5

## FIG 6

a (5') ⎯⎯⎯⎯⎯⎯⎯⎯⎯⎯⎯⎯⎯⎯⎯⎯⎯⎯ H
                                          L

b (17) ⎯⎯⎯⎯⎯⎯⎯⎯⎯⎯⎯⎯⎯⎯⎯ H
                                          L

c ⎯⎯⎯⎯⎯⎯⎯⎯⎯⎯⎯⎯⎯⎯⎯ H
                                          L

d ⎯⎯⎯⎯⎯⎯⎯⎯⎯⎯⎯⎯⎯⎯⎯ H
                                          L

e   E        E        E

f

g ⎯⎯⎯⎯⎯⎯⎯⎯⎯⎯⎯⎯⎯⎯⎯ H
                                          L

h ⎯⎯⎯⎯⎯⎯⎯⎯⎯⎯⎯⎯⎯⎯⎯ H
                                          L

i   E        E        E

k

## FIG 7

11

# FIG 8

FIG9

FIG10